(19) Europäisches Patentamt

European Patent Office

Office européen des brevets

(11) **EP 1 677 543 A2**

(12) **EUROPEAN PATENT APPLICATION**

(43) Date of publication:
**05.07.2006 Bulletin 2006/27**

(51) Int Cl.:
**H04N 7/26** *(2006.01)*

(21) Application number: **05257220.3**

(22) Date of filing: **23.11.2005**

(84) Designated Contracting States:
**AT BE BG CH CY CZ DE DK EE ES FI FR GB GR HU IE IS IT LI LT LU LV MC NL PL PT RO SE SI SK TR**
Designated Extension States:
**AL BA HR MK YU**

(30) Priority: **29.12.2004 US 25427**

(71) Applicant: **Samsung Electronics Co., Ltd.**
**Suwon-si, Gyeonggi-Do (KR)**

(72) Inventors:
- **Ha, Victor Hyeong-Seok**
  **Irvine, CA 92612 (US)**
- **Kim, Yeong-taeg**
  **Irvine, CA 92620 (US)**

(74) Representative: **Brandon, Paul Laurence et al**
**APPLEYARD LEES**
**15 Clare Road**
**Halifax HX1 2HY (GB)**

(54) **Method and apparatus for reduction of compression noise in compressed video images**

(57) A video processing method and system that obtains, transmits, and processes digital video compression rate information between a video receiver such as a Set-top-box (STB) and a display device such as a TV set. The compression rate information is obtained by the video receiver and delivered to a compression noise reducer in the display device. The compression rate information provides an indication of how much compression noise might be embedded into an incoming compressed video signal and thus allows the compression noise reducer to reduce compression noise from the incoming video signal more effectively and efficiently.

Fig. 1

100

Compressed
Video Stream → [ Information Generator ] — Compression Rate Info. → [ Information Transmitter ] — Compression Rate Info. → [ Compression Noise Remover ]

202

204

206

200

Fig. 2

**Description**

The invention relates to digital video receivers, methods of digital video processing, digital video decoding systems, encoding devices and to integrated video processing devices.

Increasingly, visual communication systems and applications advocate larger screens and higher resolutions. This trend is driven by the appearance of large CRT, LCD, PDP, and projector High-Definition (HD) TVs, and is further fueled by proliferation of digitally processed and stored visual information in the form of MPEG, DVD, DV, etc, in the consumer electronics market. As such, it becomes very important to improve the quality of images and videos that are displayed on large screens at high resolution. TV sets often implement video post-processing functions that improve and enhance the image/video signals to be displayed. Post-processing in TV sets perform functions including scaling, compression noise reduction, detail enhancement, and color enhancement.

Compression noise reduction, such as MPEG noise reduction, is one main functions implemented by post-processing in TV sets. Digital video content may be processed and encoded by a variety of digital compression techniques. For example, Digital TV (DTV) broadcasting is defined to use the digital video content processed by the MPEG-2 international video compression standard. DVD video contents are also processed by MPEG-2. High Definition (HD) content may be processed by MPEG-2 or MPEG-4. These MPEG processed digital videos contain varying degrees of unwanted artifacts that deteriorate the quality of displayed video images and scenes. The artifacts in MPEG-processed digital videos are referred to herein as "MPEG noise", or "compression noise". Compression noise reduction processes detect and remove such artifacts from digital image/video content (content) before display on a screen.

An effective and efficient compression noise reduction process can benefit from information about the actual amount of compression (compression rate) that the given content went through. The compression rate indicates the amount of video compression applied to the original uncompressed video signal. Heavily compressed videos with high compression rates take up small storage area and can be transmitted and stored more easily. However, these heavily compressed videos exhibit a higher level of compression noise. On the other hand, lightly compressed videos with low compression rates take up larger storage area while exhibiting lower compression noise.

A critical aspect of compression noise reduction is differentiation between compression noise and actual image features. What is mistakenly considered as compression noise may often turn out to be an actual part of inherent image features of the input video. Using actual compression rate information provides better indication of the amount of the compression noise that is included in the input video such that the compression noise is not confused with actual image features. The knowledge of the compression rate thus results in more effective reduction/removal of compression noise.

There is, therefore, a need for a method and system that obtains compression rate information for compressed video content, and utilizes the compression rate information in a noise reduction device to reduce compression noise in the compressed video content.

In one embodiment the present invention aims to provide a video processing method and system that obtains, transmits, and processes digital video compression rate information between a video receiver such as a Set-top-box (STB) and a display device such as a TV set. The compression rate information is obtained by the video receiver and delivered to a compression noise reducer in the display device. The compression rate information provides an indication of how much compression noise might be embedded into an incoming compressed video signal and thus allows the compression noise reducer to reduce compression noise from the incoming video signal more effectively and efficiently.

According to an aspect of the invention, there is provided a digital video receiver for receiving video information representing original video signals compressed at a compression rate, comprises: an information generator that determines information about said compression rate based on the received video information; and an information transmitter that communicates the compression rate information to a compression noise reducer. In one version the information generator retrieves information about the compression rate from the received video information. In another version, the information generator estimates the compression rate based on compression characteristics of the video information. The information generator can estimate the compression rate based on Quantization Parameter (QP) of the video information as a compression rate indicator.

Suitably, the information transmitter communicates the compression rate information to the compression noise reducer via a communication channel. Alternatively, the information transmitter incorporates the compression rate information into an existing communication protocol between the receiver and a device containing the compression noise reducer. The information transmitter can incorporate the compression rate information into an existing communication protocol between the receiver and the compression noise reducer. The information transmitter may communicate the compression rate information to the compression noise reducer during a blanking interval. The information transmitter may also communicate the compression rate information to the compression noise reducer during a blanking interval after each field/frame of video is transmitted to the compression noise reduce.

The video receiver can further comprise a video processor including a watermark extractor and a compression noise reducer, wherein the watermark extractor extracts the compression information from the communication protocol, and the compression noise reducer reduces compression noise in the received video information based on the extracted compression rate information.

The video receiver can further comprise a video processor including a detector and a compression noise reducer, wherein the detector extracts the compression information from the communication protocol after detecting a blanking interval, and the compression noise reducer reduces compression noise in the received video information based on the extracted compression rate information.

Further Features of the present invention are set out in the appended claims.

The present invention will now be described, by way of example only, with reference to the accompanying drawings; in which:

Fig. 1 shows a process block diagram of a video processing system in which an embodiment of the present invention is implemented.

Fig. 2 shows a functional block diagram of video processing according to an embodiment of the present invention.

Fig. 3 shows a block diagram of a video receiver according to an embodiment of the present invention where compression rate is computed based on embedded information in the video stream.

Fig. 4 shows a block diagram of another video receiver according to an embodiment the present invention where a Quantization Parameter (QP) is used as compression rate indicator together with a watermarking technique.

Fig. 5 shows a block diagram of another video receiver according to an embodiment the present invention where a Quantization Parameter (QP) is used as compression rate indicator and is appended at the end of each video frame for transmission during blanking interval.

Fig. 6 shows a block diagram of compression noise reducer (post-processor) according to an embodiment of the present invention that uses watermarking processing in conjunction with the video receiver of Fig 4.

Fig. 7 shows a block diagram of a compression noise reducing module video post-processor that uses blanking interval processing in conjunction with the video receiver of Fig. 5.

Fig. 8 shows a block diagram of an integrated system including a digital video decoder, compression rate extractor/ estimator, and compression noise reducer according to an embodiment of the present invention.

Video compression refers to decreasing the amount of data (e.g., number of bits per second), that represents a given video signal by exploiting spatiotemporal redundancy within the video signal. Examples of such compression techniques include Motion-JPEG, MPEG, H.26x, AVI, etc., wherein the degree of compression of digital video is represented by a range of measurable parameters, such as compression rate. Digital video includes a sequence of images, or video, generated by e.g. sampling and quantization applied to analog video signals.

Compression rate can be selected by, for example, the content producer and the broadcasting service provider, and retrieved by, for example, the receiver/decoder such as digital set-top-box (STB) or DVD player at the user site. The compression rate can be transmitted from the receiver/decoder at the user site (e.g., digital STB or DVP), to a signal processing module such as a compression noise remover (reducer) in a TV set or monitor. The compression noise remover then detects and essentially eliminates unwanted artifacts that are created by digital video compression processes.

Preferred embodiments of the present invention provide a method and system that generate, transmit and utilize information about compression rate of digitally compressed video content. In one case, the compression rate is transmitted from a set-top-box (or DVP) to a TV set, wherein the compression rate is utilized in noise reduction (e.g., within a post-processor in the TV set) to enhance removal of compression noise from the compressed digital video content.

Although information about compression rate is typically generated by the content generator or broadcasting service provider, the compression rate can also be estimated by the local decoder/receiver (e.g., STB) at the user site if it is not directly obtainable. The compression rate is then provided to the compression noise remover in the display device such as a TV set or a display monitor. The compression noise remover inside the display device then utilizes the compression rate to process the compressed video content for improving and enhancing the quality of final images displayed on the screen.

Display devices such as TV sets often implement video post-processing functions in a video-post processor that improves and enhances the image/video signals to be displayed. The video post-processor performs many post-processing functions including scaling, compression noise reduction (e.g., MPEG noise reduction (MNR)), detail enhancement (DE), and color enhancement (CE).

Compression noise is introduced into an original video signal by video compression, and includes block artifacts and a so called "mosquito" noise. For example, in a noisy image, monochromic regions are covered with random noise which may be more apparent along the edges of compressed images. The mosquito noise appears as speckles or blotchy irregular patches of pixels located near the edges of objects. Blotches usually include light and dark patches of pixels that may be static or moving. The magnitude of mosquito noise depends on the compressed video bit rate, the sharpness of edges, and amount of detail/motion in the original video source.

The level or amount of compression noise in the given video content is closely related to how much the content has been compressed during the encoding process. According to an embodiment of the present invention, to reduce compression noise, an effective and efficient compression noise reduction method in a post-processor uses information about the amount of compression of the given video content. The compression rate indicates the amount of video compression applied to the original uncompressed video signal.

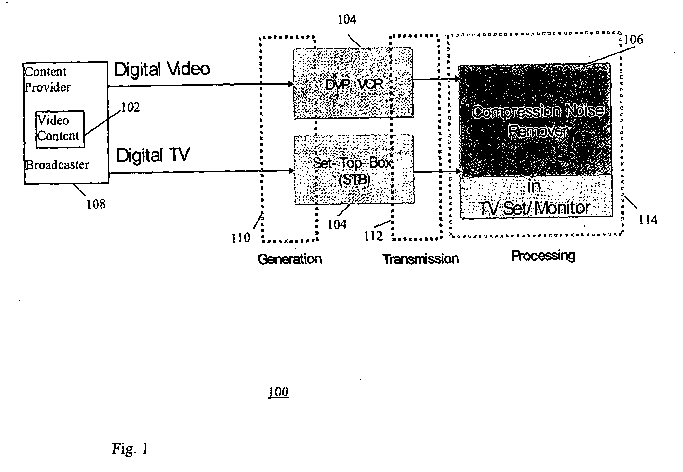

Referring to **Fig. 1,** an example visual communication environment 100 in which an embodiment of the present invention is implemented includes: (1) Compressed Digital Video Content 102 (e.g., Digital Video and/or Digital TV compressed by MPEG-2, MPEG-4, etc.); (2) digital video receiver/decoders 104 (e.g., Set-Top-Box (STB), DVP, VCR, etc.); and (3) compression noise remover 106 for reducing (removing) video compression noise (e.g., MPEG Noise Reducer (MNR) or other post-processor e.g. in a TV set or display monitor).

Compressed digital video content (compressed video stream) 102 is supplied by a content generator or a broadcasting service provider 108. Such content is available, for example, in the form of satellite/cable DTV broadcasting, internet streaming video, DVD, etc. The compressed video content is transmitted to the user site via various communication media, and the compressed content is received and decoded by one or more receiver/decoders (e.g., DVP, VDR, STB) 104 at the user site. Then, the compression noise remover 106 further processes the decoded content, including performing compression noise removal.

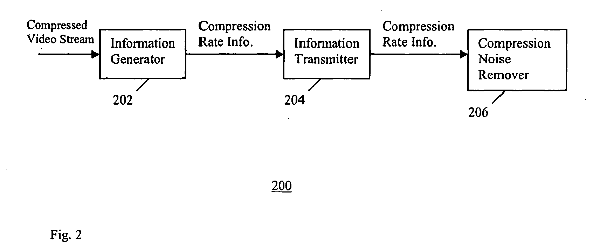

In the visual communication environment 100 of Fig. 1 an embodiment of the present invention implements: (1) an information generation function 110, (2) an information transmission function 112, and (3) a compression noise removal processing function 114. Referring to the example functional block diagram of a logical system 200 in **Fig. 2** according to an embodiment of the present invention, the information generation function 110 (Fig. 1) is implemented in an Information Generator 202 that generates information about video compression rate of video content. Further, the information transmission function 112 (Fig. 1) is implemented in an Information Transmitter 204 that transmits the information about compression rate to a Compression Noise Remover 206 that implements the compression noise removal processing function 114 (Fig. 1). The Compression Noise Remover 206 uses the compression rate information to remove compression noise from the compressed content.

Referring to both Figs. 1 and 2, in this example, the Information Generator 202 is implemented in the video receiver/decoder (e.g., STB) 104 at the user site. Further the Information Transmitter 204 is implemented in the receiver/ decoder 104 at the user site and the Compression Noise Remover 206 is implemented in a post-processor 106 in the TV set or display monitor at the user site. Other examples of implementing the Information Generator 202, the Information Transmitter 204 and the Compression Noise Remover 206 are also possible and contemplated by the present invention.

According to preferred embodiments of the present invention, information about the compression rate of digital video source can be generated (obtained) in a number of different ways. In cases where the content provider 108 embeds the compression rate information into the digital TV/DVD video signals (e.g., as quantization parameter (QP) in the compressed bitstream), the Information Generator 202 retrieves the compression rate information from the compressed bit stream. The Information Transmitter 204 than transmits the retrieved information to the Compression Noise Remover 206.

The quantization parameter (QP) is related to the degree of compression applied to each block/frame of the digital video. The QP maybe coded and sent to the receiver in existing standard video compression protocols such as MPEG-4. For example, when using MPEG-4 Part 10 Advanced Video Coding (AVC) standard, the quantization parameter is embedded into the video bitstream as syntax elements, pic_init_qp_minus26, pic_init_qs_minus26, slice_qp_delta, slice_qs_delta, mb_qp_delta, and chroma_qp_index_offset. The receiver/decoder (e.g., STB) decodes the incoming video bitstream and extracts these syntax elements to compute the quantization parameter (QP) as:

$$QP_Y = \texttt{pic\_init\_qp\_minus26} + \texttt{slice\_qp\_delta} + \texttt{mb\_qp\_delta} + 26 \text{ (for luma)}$$

$$QP_C = QP_Y + \texttt{chroma\_qp\_index\_offset} \text{ (for chroma)}.$$

For MPEG-4 Part 10, the QP value ranges from 0 to 51. A larger value of QP represents a higher level of compression while a smaller value of QP represents a lower level of compression.

Alternatively, the Information Generator 202 can utilize a method of estimating or deriving the compression rate from other information available to the local receiver/decoder 104 at the user site. Even though the QP carries the general information about the compression rate, it may not provide precise information about how much compression has actually been applied to each block of the image compared to the original image (which depends also on the rate control technique and the transmission type (Constant Bit Rate, Variable Bit Rate)).

The precise information on the compression rate is known at the encoding site 108. Normally, this information is not directly available to the receiver/decoder 104. According to preferred embodiments of the present invention, the example Information Generator 202 (which may be implemented in the receiver/decoding site) utilizes an estimation algorithm that computes an accurate estimate of the compression rate. For example, the Information Generator 202 can monitor the change of the QP value and the bit-rate assigned to each macroblock, slice, and frame of the incoming video sequence. The amount of motion in the scene also can be guessed by looking at the selection of reference pictures and the motion vectors. The amount of spatial details in the scene can be computed by monitoring the pattern of prediction blocks (plain patterns versus high frequency patterns), the residual blocks, and the content of the reconstructed blocks. Gathering all these data points and analyzing them, the Information Generator 202 can measure the amount of compression applied to each block/slice/frame of the incoming video.

Once the compression rate information is generated (obtained), the Information Transmitter 204 transmits that information to the Compression Noise Remover 206 in the display device (TV, monitor). In one example, a separate communication channel/link is used for transmission (communication) of the compression rate information from the Information Transmitter 204 to the Compression Noise Remover 206.

In another example, preferably the Information Transmitter 204 incorporates the compression rate information into the existing communication protocol between the receiver/decoder 104 and the display device 106. The Compression Noise Remover 206 then retrieves the compression rate information from the communication protocol.

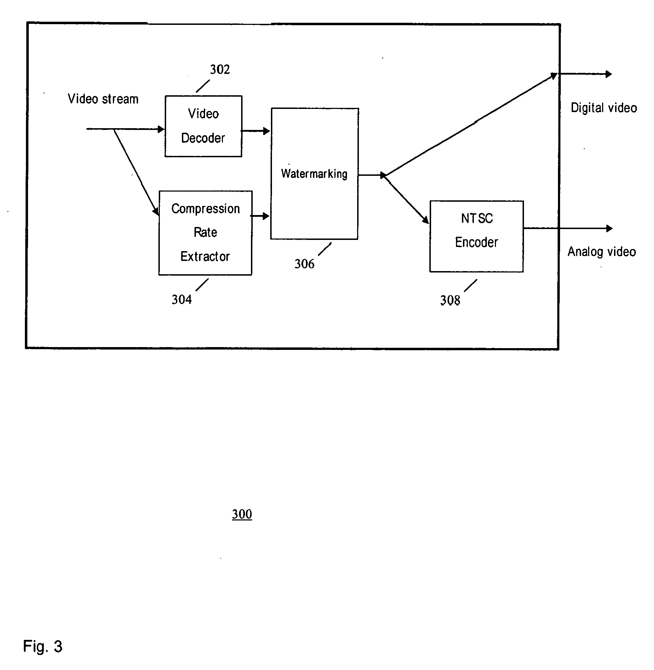

As shown by examples in **Figs. 3-4,** a watermarking technique may be applied to incorporate (embed) the compression rate of each block/field/frame of video into the corresponding pixel data of the video block/field/frame. **Fig. 3** shows a functional block diagram of an example receiver (e.g., STB) 300 of digital video signals wherein the content producer/broadcasting service provider 108 (Fig. 1) transmits/embeds the compression rate information in the video stream. The receiver 300 includes a video decoder 302, a compression rate extractor 304, a watermarker 306 and an optional NTSC encoder 308. The video decoder 302 decodes the incoming encoded video stream. The compression rate extractor 304 implements the information generation function to extract the compression rate information from the video stream as described above. The watermarker 306 implements the information transmission function using a watermarking technique to send the compression rate information to the display devices. The NTSC encoder 308 converts the digital video output of the watermarker 306 into an analog video signal. If the display is not able to support digital video, i.e., analog display device, then the encoder 308 is used to encode the incoming digital video into analog format and send it to an analog display device.

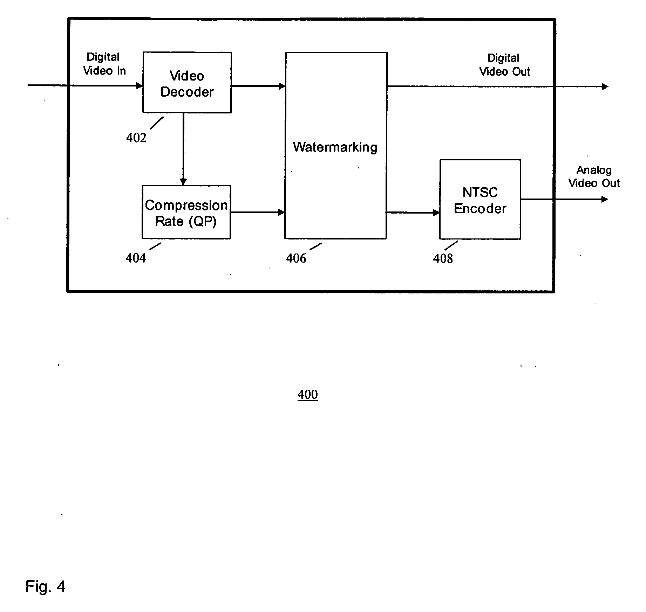

**Fig. 4** shows is a functional block diagram of another example receiver (e.g., STB) 400 of digital video signals including a video decoder 402, a compression rate generator 404, a watermarker 406 and an optional NTSC encoder 408. The video decoder 402 decodes the incoming encoded video stream. The compression rate generator 404 implements the information generation function to estimate the compression rate information from the video stream using Quantization Parameter (QP) as a compression rate indicator as described above. The watermarker 406 implements the information transmission function and uses a watermarking technique to send the compression rate information to the display devices. The NTSC encoder 408 converts the digital video output of the watermarker 406 into an analog video signal.

There are many different watermarking techniques available. In the description herein, a simple watermarking technique, known as Least Significant Bit (LSB) watermarking, is described for the purpose of illustration only. Using the LSB watermarking technique, the compression rate information is first coded into a binary code. For example, the QP value of 0 ~ 51 can be binarized to a 6-bit pattern. Then, the first six luma values of the image/frame are changed so that their least significant bits are set to zero. Finally, the six-bit pattern representing the QP value is written to the 6 least significant bits of 6 luma values, one bit by one bit. The Compression Noise Remover 206 (Fig. 2) then reads this information by extracting the 6 least significant bits of the first 6 luma values and combining them into one 6-bit code pattern. The Compression Noise Remover 206 uses the extracted compression rate information to process the video signal, and output the processed video to the display screen or to another post-processor.

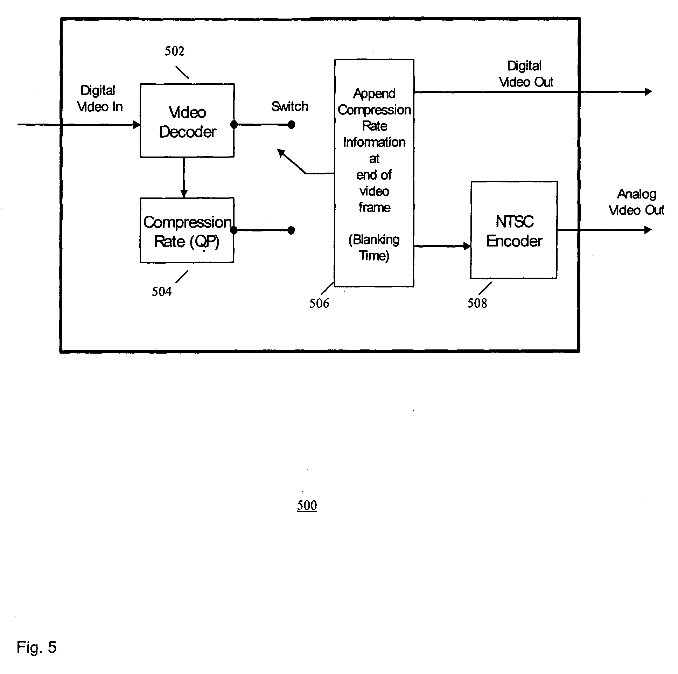

As shown by example receiver 500 in **Fig. 5,** alternatively, the compression rate information may be transmitted during a blanking interval, i.e., immediately after each frame of data is transmitted. The receiver 500 includes video decoder 502, a compression rate extractor/estimator 504, an information transmitter 506 and an optional NTSC encoder 508. The video decoder 502 decodes the incoming encoded video stream. The compression rate generator 504 implements the information generation function to estimate the compression rate information from the video stream using Quantization Parameter (QP) as a compression rate indicator as described above. The information transmitter 506 implements the information transmission function and appends the compression rate information at the end of each video frame to be sent to the display devices during blanking interval. The Compression Noise Remover 206 (Fig. 2) then simply reads this information off the line. The NTSC encoder 508 converts the digital video output of the information transmitter 506 into an analog video signal.

Using the compression rate information, the Compression Noise Remover 206 (Fig. 4) processes the input compressed video, wherein the compression rate is a cue to determine the amount of noise reduction to be performed.

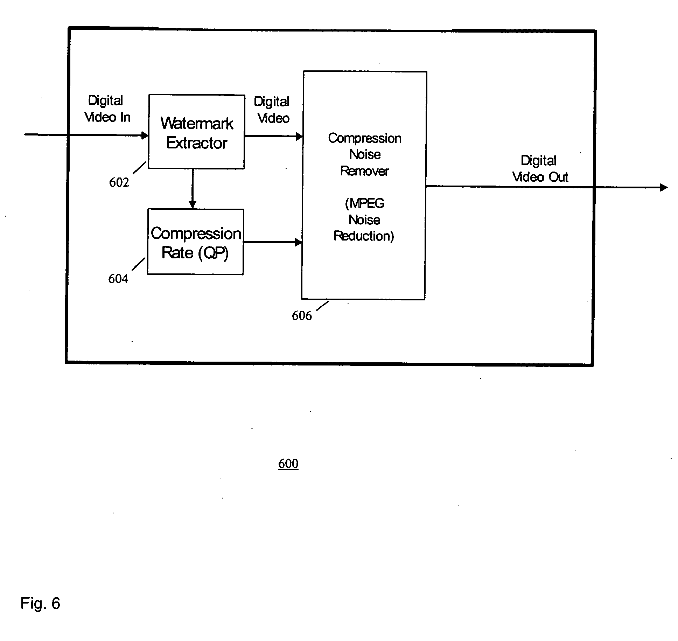

Figs. 6-7 show example implementations of post-processors, according to embodiments of the present invention, including compression noise removers that receive compression rate information using watermarking and blanking interval techniques, respectively. **Fig. 6** shows a functional block diagram of a video post-processor 600 that retrieves compression rate information sent by the receiver 400 of Fig. 4 using watermarking. The example post-processor 600 includes a watermark extractor 602 that extracts compression rate information 604, and a compression noise remover 606 which uses the compression rate information 604 to remove compression noise from the video signal input from the watermark extractor 602.

The watermark extractor 602 receives as input digital video (uncompressed by decoder) that contains watermark signals embedded within the video itself via various watermarking techniques. The extractor 602 extracts the watermark signal (e.g., the compression rate) that is embedded in the digital video input. The extractor 602 outputs the extracted watermark signal (as the compression rate information 604), and the input digital video.

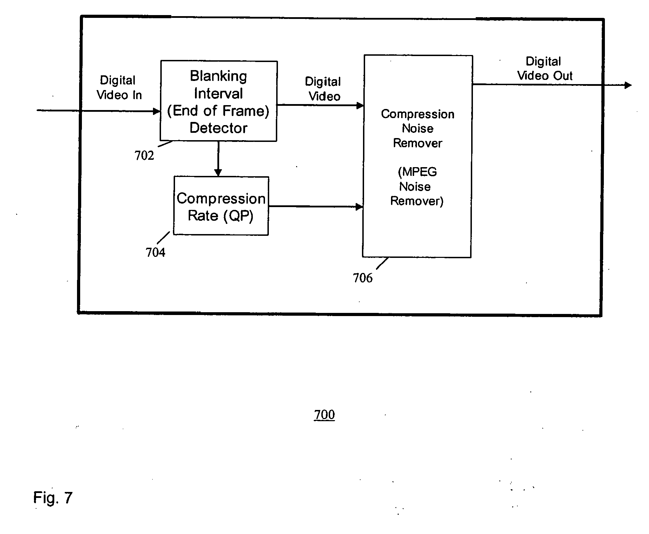

**Fig. 7** shows a functional block diagram of a video post-processor 700 that retrieves compression rate information sent by the receiver 500 of Fig. 5 in blanking intervals. The example post-processor 700 includes a blanking interval detector 702 that outputs compression rate information 704, and a compression noise remover 706 which uses the compression rate from the compression rate processor 704 to remove compression noise from the video signal input from the detector 702.

The detector 702 receives as input digital video followed by compression rate information that occupies otherwise an empty time interval known as blocking interval. The detector 702 detects the blanking interval and extracts the compression rate information 704 that is transmitted during the blanking interval. The detector 704 also outputs the input digital video (minus the compression rate information).

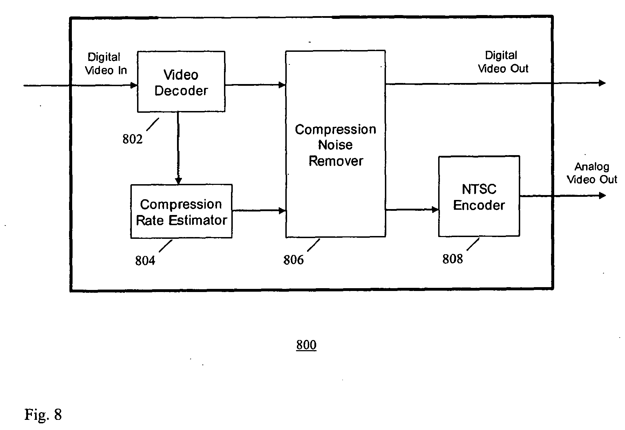

In accordance with another embodiment of the present invention, the information generation function, information transmission function and noise removal function described above, can be integrated into e.g. a single-chip or single device implementation within a set-top-box or TV set. Fig. 8 shows a block diagram of an example integrated device 800 according to the present invention, comprising a digital video decoder 802 for decoding encoded video signals, a compression rate extractor/estimator 804 that extracts/estimates the compression rate from the video signals, and a compression noise remover 806 that uses compression rate information from the extractor/estimator 804 for compression noise reduction. The video decoder (e.g., MPEG decoder) 802, the compression rate estimator/extractor 806, and the compression noise remover (e.g., MNR) 808 are logical devices that reside in the single device 800. In this case, the data embedding/transmission technique, such as watermarking, is no longer needed. All three components 802, 808 and 806 have close interconnection and communication with each other. The device 800 may further include an optional NTSC encoder 808.

In one embodiment, the decoder 802 receives as input compressed digital video, and decompresses/decodes the input digital video, and outputs uncompressed/decoded digital video. Further, the extractor 804 receives as input syntax elements/data of incoming digital video (obtained from the video decoder), then estimates the compression rate of each block/field/frame of digital video based on the syntax elements/data, and outputs the compression rate information that has been estimated.

The present invention has been described in considerable detail with reference to certain preferred versions thereof; however, other versions are possible. Therefore, the spirit and scope of the appended claims should not be limited to the description of the preferred versions contained herein.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A digital video receiver for receiving video information representing original video signals compressed at a compression rate, comprising:

   an information generator (202) that determines information about said compression rate based on the received video information; and
   an information transmitter (204) that communicates the compression rate information to a compression noise reducer (206).

2. The video receiver of claim 1 wherein the information generator (202) retrieves information about the compression rate from the received video information.

3. The video receiver of claim 1 wherein the information generator (202) estimates the compression rate based on compression characteristics of the video information.

4. The video receiver of claim 1 wherein the information generator (202) estimates the compression rate based on Quantization Parameter (QP) of the video information as a compression rate indicator.

5. The video receiver of any preceding claim wherein the information transmitter (204) communicates the compression rate information to the compression noise reducer (206) via a communication channel.

6. The video receiver of any preceding claim wherein the information transmitter (204) incorporates the compression rate information into an existing communication protocol between the receiver and a device containing the compression noise reducer (206).

7. The video receiver of claim 1 wherein the information transmitter (204) incorporates the compression rate information into an existing communication protocol between the receiver and the compression noise reducer (206).

8. The video receiver of claim 7 wherein the information transmitter (204) uses watermarking to embed the compression rate information into the existing communication protocol.

9. The video receiver of claim 8 further comprising a video processor including a watermark extractor (602) and a compression noise reducer (606), wherein the watermark extractor extracts the compression information from the communication protocol, and the compression noise reducer reduces compression noise in the received video information based on the extracted compression rate information.

10. The video receiver of claim 1 wherein the information transmitter (204) communicates the compression rate information to the compression noise reducer (206) during a blanking interval.

11. The video receiver of claim 1 wherein the information transmitter (204) communicates the compression rate information to the compression noise reducer (206) during a blanking interval after each frame of video is transmitted to the compression noise reducer.

12. The video receiver of claim 10 further comprising a video processor including a detector (702) and a compression noise reducer (706), wherein the detector extracts the compression information from the communication protocol after detecting a blanking interval, and the compression noise reducer reduces compression noise in the received video information based on the extracted compression rate information.

13. The video receiver of claim 1 further comprising a video processor including a compression noise reducer (806) that reduces compression noise in the received video information based on the compression rate information from the information transmitter (204).

14. A method of digital video processing, comprising the steps of:

receiving video information representing original video signals compressed at a compression rate;
determining information about said compression rate based on the received video information; and
communicating the compression rate information to a post-processor.

15. The method of claim 14 wherein the step of determining information about said compression rate further includes the steps of retrieving information about the compression rate from the received video information.

16. The method of claim 14 wherein the step of determining information about said compression rate further includes the steps of estimating the compression rate based on compression characteristics of the video information.

17. The method of claim 14 wherein the step of determining information about said compression rate further includes the steps of estimating the compression rate based on Quantization Parameter (QP) of the video information as a compression rate indicator.

18. The method of any one of claims 14-17 wherein the steps of communicating the compression rate information further includes the steps of communicating the compression rate information via a communication channel.

19. The method of any one of claims 14-18 wherein the steps of communicating the compression rate information further includes the steps of incorporating the compression rate information into an existing communication protocol with the post-processor.

20. The method of claim 19 wherein the steps of incorporating the compression rate information further includes the steps of using watermarking to embed the compression rate information into the existing communication protocol.

21. The method of claim 19 further comprising the steps of:

in the post-processor, extracting the compression rate information from the communication protocol, and reducing compression noise in the received video information based on the extracted compression rate information.

22. The method of claim 14 wherein the steps of communicating the compression rate information further includes the steps of communicating the compression rate information during a blanking interval.

23. The method of claim 14 wherein the steps of communicating the compression rate information further includes the steps of communicating the compression rate information during a blanking interval after each frame of video is transmitted to the post-processor.

24. The method of claim 23 further comprising the steps of:

in the post-processor, extracting the compression rate information from the communication protocol, and reducing compression noise in the received video information based on the extracted compression rate information.

25. The method of claim 14 further comprising the steps of performing compression noise reduction on the received video information based on the received compression rate information in the post-processor.

26. A digital video decoding system that receives coded compressed digital video information, comprising:

a decoder (302, 402, 502, 802) that decodes the received coded digital video;
an information generator (202) that obtains information about the compression rate of the incoming digital video;
an encoder (308, 408, 508, 808) that incorporates the compression rate information in a communication protocol;
an information transmitter (204) that communicates the coded compression rate information to post-processing devices.

27. The system of claim 26 wherein the information generator (202) includes an extractor (304) that extracts the obtained information about the compression rate of the incoming digital video.

28. The system of claim 26 wherein the information generator (202) estimates the compression rate of the incoming digital video.

29. The system of claim 26 wherein the encoder (308, 408) incorporates the compression rate information using watermarking.

30. The system of claim 26 wherein the encoder (508) incorporates the compression rate information using a blank interval.

31. A digital video processing system that receives a video sequence from an external source, the video sequence including information about compression rate of the video sequence, comprising:

an extractor (304) that extracts said information about the compression rate from the video sequence;
a noise reducer (306) that processes the video sequence by essentially removing compression noise from the video sequence using the compression rate information; and
an output device (308) that outputs the processed video sequence for further processing.

32. The system of claim 31 wherein the output device (308) outputs the processed video sequence to a display device for display.

33. The system of claim 31 or claim 32 wherein the extractor (304) receives the video sequence along with its compression rate from a receiver/decoder source device.

34. The system of any one of claims 31-33 wherein the noise reducer (306) adjusts the level of compression noise reduction based on the compression rate information.

35. The system of any one of claims 31-34 wherein the compression rate information is embedded in the video sequence, and the extractor (306) extracts the compression rate information from the video sequence.

36. The system of any one of claims 31-35 wherein the external source comprises a set-top-box.

37. A digital video decoding system comprising:

a decoder that receives an encoded and compressed video sequence from an external source, and decodes the video sequence;
an extractor that extracts the compression rate of the vide sequence using the video sequence;
a noise reducer that performs compression noise reduction on the video sequence based on the compression rate information.

38. The system of claim 37 wherein the noise reducer adjusts the level of compression noise reduction as a function of the compression rate information.

39. The system of claim 37 wherein the decoder comprises an MPEG decoder.

40. The system of claim 37 wherein the extractor extracts the compression rate information that is included by the external source in the video sequence.

41. The system of claim 37 wherein the extractor computes an estimate of the compression rate of the video sequence.

42. The system of claim 37 wherein the noise reducer reduces MPEG compression noise from the video sequence.

43. The system of claim 37 further including an output device that outputs the noise-reduced video sequence for further processing.

44. The system of claim 43 wherein the output device outputs the noise-reduced video sequence to a display device for display.

45. An encoding device for a video processing system, comprising:

an encoder that incorporates information about the compression rate of a video sequence into the video sequence.

**46.** The device of claim 45 wherein the encoder appends information about the compression rate of a video sequence at the end of each frame of the video sequence.

**47.** The device of claim 47 wherein the encoder embeds the compression rate information into each frame of the video.

**48.** The device of claim 47 wherein the encoder embeds the compression rate information into each frame of the video using watermarking.

**49.** An algorithm that receives digital video and extracts/estimates the compression rate of the incoming video

**50.** A method of digital video processing, comprising the steps of:

receiving video information representing original video signals compressed at a compression rate;
determining information about said compression rate based on the received video information.

**51.** The method of claim 50 wherein the step of determining information about said compression rate further includes the steps of retrieving information about the compression rate from the received video information.

**52.** The method of claim 50 wherein the step of determining information about said compression rate further includes the steps of estimating the compression rate based on compression characteristics of the video information.

**53.** The method of claim 50 wherein the step of determining information about said compression rate further includes the steps of estimating the compression rate based on Quantization Parameter (QP) of the video information as a compression rate indicator.

**54.** An integrated video processing device, comprising:

a video decoder (802) that decodes an incoming encoded video sequence;
an information generator (804) that determines the compression rate of the video sequence;
a noise reducer (806) that reduces compression noise in the video sequence based on the compression rate information.

**55.** The device of claim 54 wherein the noise reducer (806) adjusts the level of compression noise reduction as a function of the compression rate information.

**56.** The device of claim 54 or claim 55 wherein the information generator (804) extracts information about the compression rate from the received video information.

**57.** The device of any one of claims 54-56 wherein the information generator (804) estimates the compression rate based on compression characteristics of the video sequence.

**58.** The device of claim 54 wherein the information generator (804) estimates the compression rate based on Quantization Parameter (QP) of the video information as a compression rate indication.

104

Content
Provider

Digital Video

DVP, VCR

Compression Noise
Remover

106

Video
Content

102

Digital TV

Set- Top- Box
(STB)

in

Broadcaster

TV Set/ Monitor

108

104

114

110

Generation

112

Transmission

Processing

100

Fig. 1

Compressed
Video Stream    | Information Generator |   Compression Rate Info.   | Information Transmitter |   Compression Rate Info.   | Compression Noise Remover |

202            204            206

200

Fig. 2

Fig. 3

Digital
Video In

Video
Decoder

402

Compression
Rate (QP)

404

Watermarking

406

Digital
Video Out

NTSC
Encoder

408

Analog
Video Out

400

Fig. 4

Fig. 5

600

Fig. 6

Digital
Video In

Blanking
Interval
(End of Frame)
Detector

702

Digital
Video

Compression
Rate (QP)

704

Compression
Noise
Remover

(MPEG
Noise
Remover)

706

Digital
Video Out

700

Fig. 7

Fig. 8

800